# EUROPEAN PATENT SPECIFICATION

(11) **EP 1 443 685 B1**
(45) Date of publication and mention of the grant of the patent: **24.05.2006**
(21) Application number: 03250655.2
(22) Date of filing: 01.02.2003
(51) Int. Cl.: H04B 10/08

(54) **Method and apparatus for monitoring channel performance in dense wavelength division multiplexed (DWDM) optical networks**
Verfahren und Vorrichtung zur Kanalleistungsüberwachung in dichte WDM optische Netzwerke
Méthode et appareil de surveillance de performance des canaux dans des systèmes optiques de multiplexage par répartition en longueur d'onde dense

(43) Date of publication of application: 04.08.2004
(73) Proprietor: Agilent Technologies, Inc., a corporation of the State of Delaware, Palo Alto, CA 94303-0870 (US)
(72) Inventor: Xu, Yu, Herts AL1 3PS (GB)
(74) Representative: Coker, David Graeme

(56) References cited:
- US-B1- 6 262 822
- US-B1- 6 310 703
- US-B1- 6 473 210
- WENLU CHEN ET AL: "ADDING OSNR MONITORING FUNCTIONALITY ON AWG BASED POWER MONITORING CIRCUITS" OPTICAL FIBER COMMUNICATIONS CONFERENCE, ANAHEIM, CA, USA, vol. 1, 17 March 2002 (2002-03-17), pages 668-670, XP002247381

## Description

### Field of the Invention

This invention relates to a method and apparatus for monitoring channel performance in Dense Wavelength Division Multiplexed (DWDM) optical networks, and particularly, though not exclusively, to such a method and apparatus for testing the channel performance of a DWDM networks for transmission, or transport, quality, such as bit error rate (BER) tests or protocol based analyses and optical spectral analyses, such as wavelength or optical signal to noise ratio analyses.

### Background of the Invention

In optical communications, the transmission of multiple channels on the basis of Dense Wavelength Division Multiplexing (DWDM) is an economical solution to meet a continuous increase in demand for bandwidth, and to make the best use of existing fiber optic infrastructures. A DWDM optical communications system makes completely different demands on measuring equipment on the optical side than conventional single-channel systems where the exact transmission wavelength is of secondary importance and only the signal power level needs to be carefully monitored.

In DWDM optical communications systems, both transmission, or transport, quality and optical parameters of transmission data are required to be monitored over all channels. Tunable optical filters are core components in monitoring DWDM systems. However, the requirements for transmission bandwidth of the tunable optical filters are fundamentally different for the two types of testing. In transmission, or transport, quality tests such as BER tests or protocol based tests, a tunable bandpass optical filter with relatively wide bandwidth is required to pass whole individual channels. The bandwidth of such a tunable bandpass filter has to be wide enough to be able to lock onto the required channel and to pass through a sufficient proportion of the modulated transmission data signal in the locked channel. For optical spectral analyses, a tunable optical filter with a relatively narrow bandwidth has to be used to scan wavelength and the noise power spectrum. The bandwidth of the tunable filter for optical spectral analyses should be narrow enough to achieve high measurement accuracy. Due to the different bandwidth requirements, when both filters are required in test equipment for DWDM systems, the two optical filters are conventionally configured in parallel, particularly in field applications. Since there are, therefore, two parallel paths for the light, such testing systems require the input light to be split, which reduces the power of the light in each path, and requires a multiplicity of other components that need to be present in each path

US Patent No. 6,310,703 (Alavie et al.) discloses the use of a tunable channel selection optical filter for selecting and filtering one particular channel from a DWDM spectrum. After the tunable channel selection optical filter, the optical channel signal is split into two parts. One of them is then optically input into an optical filter having a transmission characteristic that varies proportionally with wavelength. The other optical path is unperturbed. The optical spectrum of the channel is then analyzed by comparing the outputs of the two optical paths to provide a ratiometric wavelength and power determination analysis. Data transmission tests, which require the whole optical spectrum of the channel cannot be performed with this apparatus.

### Brief Summary of the Invention

The present invention therefore seeks to provide a method and apparatus for monitoring channel performance in Dense Wavelength Division Multiplexed (DWDM) optical networks, which overcomes, or at least reduces the above-mentioned problems of the prior art.

Accordingly, in a first aspect, the invention provides an apparatus for monitoring channel performance in Dense Wavelength Division Multiplexed (DWDM) optical networks, the apparatus comprising an optical input for receiving an optical signal from a DWDM optical network, a tunable optical channel selection filter coupled to the optical input and having an output, a tunable optical notch filter having a bandwidth substantially narrower than that of the tunable optical channel selection filter and having an input coupled to the output of the tunable optical channel selection filter and an output, an optical signal to electrical signal converter having an input coupled to the output of the tunable optical notch filter for receiving an optical signal from the output of the tunable optical notch filter, and for converting it into a corresponding electrical signal, and signal processing means having an input coupled to the output of the optical signal to electrical signal converter for processing the corresponding electrical signal and an output for providing a processed signal, the signal processing means including means for carrying out channel transmission analysis and means for carrying out optical spectral analysis.

Preferably, the optical signal to electrical signal converter comprises at least one photodetector.

The channel transmission analysis preferably includes Bit Error Rate (BER) tests and/or protocol bases analysis, and the optical spectral analysis preferably includes wavelength or Signal to Noise (S/N) ratio analysis.

The apparatus preferably further comprises a control means for controlling the tuning of at least one of the tunable optical notch filter and the tunable optical channel selection filter.

The apparatus preferably further comprises a wavelength reference source for providing a wavelength reference for calibrating the wavelength of at least one of the tunable optical channel selection filter and the tunable optical notch filter.

According to a second aspect, the invention provides a method for monitoring channel performance in Dense Wavelength Division Multiplexed (DWDM) optical networks, the method comprising the steps of receiving an optical signal from a DWDM optical network, passing the optical signal through a tunable optical channel selection filter, passing the optical signal from the tunable optical channel selection filter through a tunable optical notch filter, and processing the optical signal from the tunable optical notch filter to determine channel performance in the optical network, wherein the step of processing the optical signal includes the steps of channel transmission analysis and optical spectral analysis.

Preferably, the method further comprises the step of converting the optical signal from the tunable optical notch filter into a corresponding electrical signal prior to the processing step.

In a preferred embodiment, the method further comprises the step of controlling the tuning of at least one of the tunable optical notch filter and the tunable optical channel selection filter.

Preferably, the method further comprises the step of calibrating the wavelength of at least one of the tunable optical notch filter and the tunable optical channel selection filter.

The step of channel transmission analysis preferably includes Bit Error Rate (BER) tests and/or protocol bases analysis, and the step of optical spectral analysis preferably includes wavelength or Signal to Noise (S/N) ratio analysis. Transport quality analysis may also be carried out.

### Brief Description of the Drawings

One embodiment of the invention will now be more fully described, by way of example, with reference to the drawings, of which:
FIG. 1 shows, schematically, channel filtering of a DWDM spectrum;
FIG. 2 shows, schematically, notch filtering of the DWDM spectrum of FIG. 1;
FIG. 3 shows a block diagram of apparatus according to one embodiment of the present invention having one photodetector unit present; and
FIG. 4 shows a block diagram of apparatus according to another embodiment of the present invention having two photodetector units present.

### Detailed Description of the Drawings

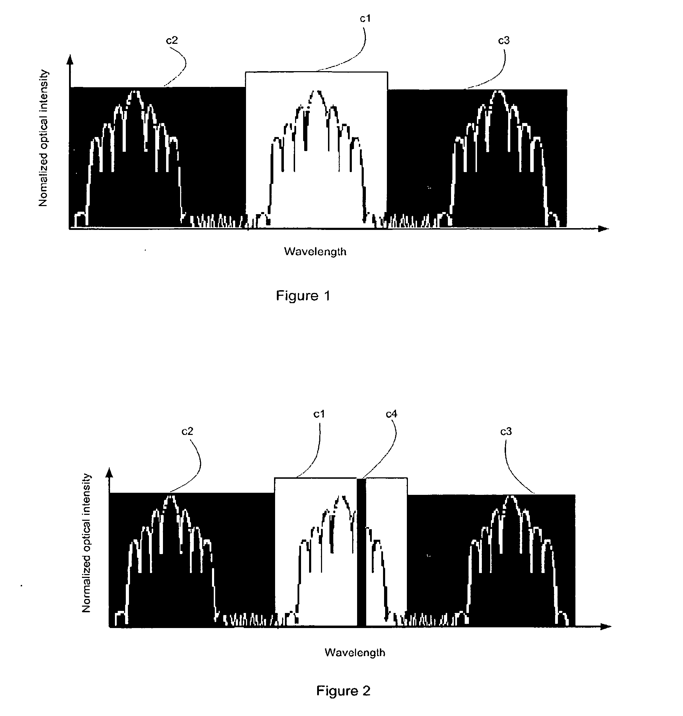

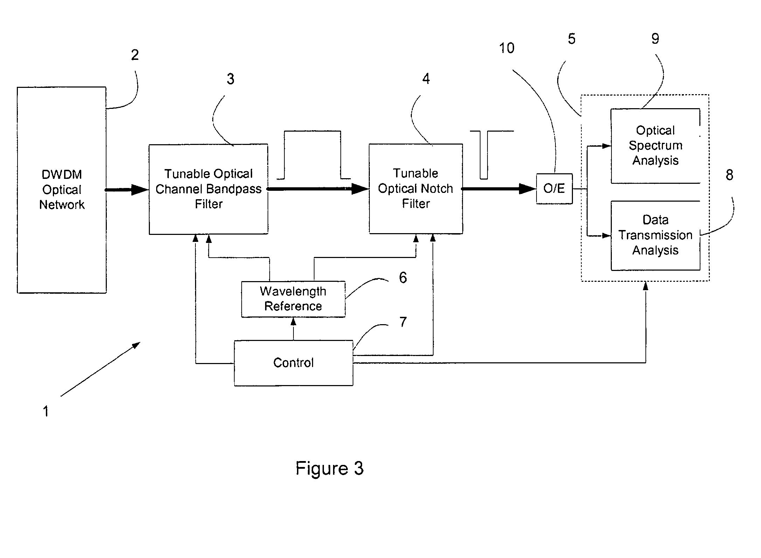

Thus, Figure 1 shows the response of a tunable optical channel selection filter that has been tuned to allow a channel c1 to be passed through, whilst blocking transmission of channels c2 and c3. The filter response is shown as a theoretical rectangular response for illustrative purposes, not to scale; it being appreciated that actual filter responses will have a roll-off characteristic. Figure 2 shows the filtered channel transmission signal of Figure 1 after having been passed through a tunable optical notch filter which is used to scan the spectrum and to remove a narrow part c4 of the optical spectrum from the channel c1. Such a tunable optical notch filter can be arranged to pass only the narrow part c4, or to pass the channel c1 without the filtered part c4. Again, the filter responses are shown as theoretical rectangular responses for illustrative purposes, not to scale, whereas the actual filter responses will have a roll-off characteristic.

Figure 3 shows an apparatus 1 according to one embodiment of the present invention for monitoring the channel performance of optical channels in a DWDM optical network 2. A tunable optical channel selection filter 3 with a relatively wide bandwidth is used to tune onto, isolate and transmit a predetermined channel from the DWDM network. A tunable optical notch filter 4 with a relatively narrow bandwidth is used to scan the optical spectrum of the predetermined channel transmitted by the channel selection filter 3. After passing through the two tunable filters 3 and 4, the transmitted optical data in the predetermined channel is received by an Optical signal to Electrical Signal Converter (O/E converter) unit 10 to convert the filtered optical data into a corresponding electrical data signal. The electric data signal is then passed to a processing module 5 where the electrical data signal is analysed.

A wavelength reference source 6 is also provided to enable wavelength calibration of the two tunable filters 3 and 4. The wavelength reference source provides optical signals of known reference wavelengths to both the filters 3 and 4. These reference signals are filtered by one or both of the respective filters and are then passed to the processing module 5. These filtered reference signals are used by the processing module to calibrate the filters, since the precise wavelengths of the reference optical signals are known by the processing module 5.

A control module 7 receives information from the processing module 5 and includes electronic hardware and software used to control the two tunable optical filters 3 and 4. In particular, the control module 7 is used to control the tuning of the two optical filters to control the channel being passed by filter 3 and to control the scanning of the notch filter 4. Information regarding the reference optical signals is used by the control module 7 to adjust or stabilize the two filters.

The processing module 5 further includes a channel data transmission analysis system 8 including electronic hardware and software for amplifying and analyzing the electrical transmission data signal converted by the O/E converter unit 10, which may be a photodetector, to evaluate the transmission and transport quality and performance of the predetermined channel in the DWDM optical network, such as bit error rate (BER) tests, and an optical spectrum analyzer 9 including electronic hardware and software for amplifying and analyzing the electrical transmission data signal converted by the O/E converter unit (photodetector) to perform optical spectral analyses, such as wavelength or optical signal to noise ratio analyses.

Referring back to Figure 1, the basic requirement of the tunable optical channel selection filter 3 is that its bandwidth should be wide enough to transmit the predetermined channel c1 whilst blocking the adjacent channels c2 and c3, such that a sufficient proportion of the amplitude of the predetermined channel is transmitted enable performance tests to be carried out. Examples of suitable tunable optical channel selection filters are tunable Fabry-Perot optical filters, tunable optical fiber Bragg grating filters, or diffraction gratings with mechanical tuning and driving devices.

Referring to Figure 2, the basic requirement of the tunable optical notch filter 4 is that its notch bandwidth should be sufficiently narrow within the predetermined channel. The accuracy of optical spectrum analysis depends on the notch bandwidth, which removes the narrow part of the optical spectrum from the predetermined channel. Tunable optical fiber Bragg grating filters, tunable optical surface plasmon resonance optical notch filters, or other tunable optical notch filters can be used.

The wavelength reference source 6 is used to correct any drift with time and temperature of the tunable channel selection optical filter and the tunable optical notch filter 4. The output from the wavelength reference source 6 provides a single wavelength or a multi-wavelength optical signal with a very high wavelength accuracy. This wavelength reference signal is provided to the control system 7 to enable the control system 7 to control and correct the tuning of the two tunable optical filters 3 and 4. The output from the wavelength reference device 6 can be either a multi-wavelength optical signal or a single wavelength optical signal or a broadband optical signal with at least an optical spectral absorption notch. The wavelength reference source 6 can be provided by a number of different devices, such as laser sources, Fabry-Perot optical etalons, optical fiber Bragg gratings or optical surface plasmon resonance devices.

The channel transmission analysis system 8 is used to process the electrical transmission data signal to evaluate the channel performance of a DWDM networks for transmission, or transport, quality, such as bit error rate (BER) tests or protocol based analyses. Under the control of the control module 7 and the signal processing module 5, the tunable optical channel selection filter 3 scans over all channels of the DWDM system. Once an individual required channel is found, the tunable filter 3 is locked at the required channel. The channel optical transmission data signal then passes through the tunable optical filter 3. Tuning control of the tunable optical notch filter 4 is also provided by the control system 7 and the signal processing module 5. After passing through the two tunable filters, the optical transmission data signal from the required channel can be used for the evaluation of transmission and transport quality, for example using BER tests or protocol based analyses by the channel data transmission analysis system 8, as well as optical spectrum analyses such as wavelength or optical signal to noise ratio (OSNR) of the DWDM optical network by the optical spectrum analysis system 9.

In a preferred embodiment of the invention, the tunable optical notch filter 4 is used to provide appropriate signals to enable the optical spectrum analyzer 9 to analyze optical parameters of the required channel by removing part of the optical spectrum of the transmitted data optical signal, for example wavelength and optical signal to noise ratio (OSNR). The remaining part of the optical spectrum of the optical transmission data signal which is also converted into an electrical signal by the O/E unit 10 is processed and analyzed by the channel transmission analysis system 8 to perform the transmission, or transport, quality, such as bit error rate (BER) tests or protocol based analyses.

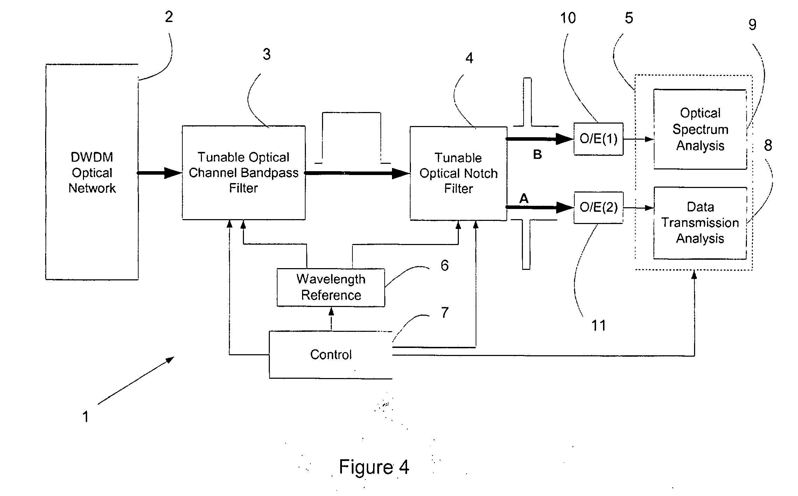

In another embodiment of the invention, as shown in Figure 4, the tunable optical notch filter 4 can have one input port and two output ports. After passing through the tunable optical notch filter 4, one output port (A) passes the whole of the signal transmitted by the optical channel selection filter 3 except for the narrow band removed by the tunable optical notch filter 4, while the other output port (B) provides only the narrow band of the optical spectrum removed by the tunable optical notch filter 4. Both output signals from the two output ports A and B of the tunable optical notch filter 4 can be used to examine the transmission and transport quality of the transmitted channel transmission data signal. Optical fiber Bragg gratings are particularly effective as this type of tunable notch filters, with the forward transmission optical beam of the optical fiber Bragg grating as "port A", and the backward reflection beam of the optical fiber Bragg grating as "port B".

In this embodiment, two optical to electrical converters, O/E(1) and O/E(2), are used to receive the optical signal from the port A and port B at the same time. The electrical signal converted from port A is input into the data transmission analysis system 8 to perform the transmission, or transport, quality, such as bit error rate (BER) tests or protocol based analyses. The electrical signal converted from port B is input into the optical spectrum analyzer 9 to perform optical spectral analyses, such as wavelength or optical signal to noise ratio.

By tuning the tunable optical notch filter 4 to a portion of the spectrum between two channels, the whole of the channel transmitted by the optical channel selection filter 3 will be passed by the tunable optical notch filter from output port A. This will therefore enable accurate transmission and transport quality tests to be carried out.

It will be appreciated that although only one particular embodiment of the invention has been described in detail, various modifications and improvements can be made by a person skilled in the art without departing from the scope of the present invention as defined by the appended claims.

## Claims

1. Apparatus (1) for monitoring channel performance in Dense Wavelength Division Multiplexed (DWDM) optical networks, the apparatus comprising an optical input for receiving an optical signal from a DWDM optical network (2), a tunable optical channel selection filter (3) coupled to the optical input and having an output, **characterized by** a tunable optical notch filter (4) having a bandwidth substantially narrower than that of the tunable optical channel selection filter (3) and having an input coupled to the output of the tunable optical channel selection filter (3) and an output, an optical signal to electrical signal converter (10) having an input coupled to the output of the tunable optical notch filter (4) for receiving an optical signal from the output of the tunable optical notch filter (4), and for converting it into a corresponding electrical signal, and signal processing means (5) having an input coupled to the output of the optical signal to electrical signal converter (10) for processing the corresponding electrical signal and an output for providing a processed signal, the signal processing means (5) including means (8) for carrying out channel transmission analysis and means (9) for carrying out optical spectral analysis.

2. Apparatus according to claim 1, wherein the optical signal to electrical signal converter (10) comprises at least one photodetector for receiving the filtered optical signal from the output of the tunable optical notch filter and for providing an electrical signal corresponding to the received filtered optical signal.

3. Apparatus according to claim 2, wherein the signal processing means (5) receives the electrical signal from the photodetector.

4. Apparatus according to any preceding claim, further comprising a control means (7) for controlling the tuning of at least one of the tunable optical notch filter (4) and the tunable optical channel selection filter (3).

5. Apparatus according to any preceding claim, further comprising a wavelength reference source (6) for providing a wavelength reference for calibrating the wavelength of at least one of the tunable optical channel selection filter (3) and the tunable optical notch filter (4).

6. Apparatus according to any preceding claim, wherein the channel transmission analysis includes Bit Error Rate (BER) tests and/or protocol bases analysis.

7. Apparatus according to any preceding claim, wherein the optical spectral analysis includes wavelength or Signal to Noise (S/N) ratio analysis.

8. A method for monitoring channel performance in Dense Wavelength Division Multiplexed (DWDM) optical networks, the method comprising the steps of:
receiving an optical signal from a DWDM optical network,
passing the optical signal through a tunable optical channel selection filter, **characterized by**
passing the optical signal from the tunable optical channel selection filter through a tunable optical notch filter, and
processing the optical signal from the tunable optical notch filter to determine channel performance in the optical network,
wherein the step of processing the optical signal includes the steps of channel transmission analysis and optical spectral analysis.

9. A method for monitoring channel performance according to claim 8, further comprising the step of converting the optical signal from the tunable optical notch filter into a corresponding electrical signal prior to the processing step.

10. A method for monitoring channel performance according to either claim 8 or claim 9, further comprising the step of controlling the tuning of at least one of the tunable optical notch filter and the tunable optical channel selection filter.

11. A method for monitoring channel performance according to any one of claims 8, 9 or 10, further comprising the step of calibrating the wavelength of at least one of the tunable optical notch filter and the tunable optical channel selection filter.

12. A method for monitoring channel performance according to any one of claims 8 to 11, wherein the step of channel transmission analysis includes Bit Error Rate (BER) tests and/or protocol bases analysis.

13. A method for monitoring channel performance according to any one of claims 8 to 12, wherein the step of optical spectral analysisincludes wavelength or Signal to Noise (S/N) ratio analysis.

## Patentansprüche

1. Vorrichtung (1) zum Überwachen eines Kanalverhaltens in Dicht-Wellenlängenmultiplex- (DWDM-) Optiknetzen, wobei die Vorrichtung einen optischen Eingang zum Empfangen eines optischen Signals von einem DWDM-Optiknetz (2), ein abstimmbares optisches Kanalauswahlfilter (3), das mit dem optischen Eingang gekoppelt ist und einen Ausgang aufweist, **gekennzeichnet durch** ein abstimmbares optisches Kerbfilter (4), das eine Bandbreite aufweist, die wesentlich schmäler ist als diejenige des abstimmbaren optischen Kanalauswahlfilters (3), und einen Eingang, der mit dem Ausgang des abstimmbaren optischen Kanalauswahlfilters (3) gekoppelt ist, und einen Ausgang aufweist, einen Optiksignal-zu-Elektriksignal-Wandler (10), der einen Eingang aufweist, der mit dem Ausgang des abstimmbaren optischen Kerbfilters (4) gekoppelt ist, zum Empfangen eines optischen Signals von dem Ausgang des abstimmbaren optischen Kerbfilters (4) und zum Umwandeln desselben in ein entsprechendes elektrisches Signal, und eine Signalverarbeitungseinrichtung (5), die einen Eingang, der mit dem Ausgang des Optiksignal-zu-Elektriksignal-Wandlers (10) gekoppelt ist, zum Verarbeiten des entsprechenden elektrischen Signals und einen Ausgang zum Bereitstellen des verarbeiteten Signals aufweist, wobei die Signalverarbeitungseinrichtung (5) eine Einrichtung (8) zum Ausführen einer Kanalübertragungsanalyse und eine Einrichtung (9) zum Ausführen einer optischen Spektralanalyse umfasst, aufweist.

2. Vorrichtung gemäß Anspruch 1, bei der der Optiksignalzu-Elektriksignal-Wandler (10) zumindest einen Photodetektor zum Empfangen des gefilterten optischen Signals von dem Ausgang des abstimmbaren optischen Kerbfilters und zum Bereitstellen eines elektrischen Signals, das dem empfangenen gefilterten optischen Signal entspricht, aufweist.

3. Vorrichtung gemäß Anspruch 2, bei der die Signalverarbeitungseinrichtung (5) das elektrische Signal von dem Photodetektor empfängt.

4. Vorrichtung gemäß einem der vorhergehenden Ansprüche, die ferner eine Steuereinrichtung (7) zum Steuern der Abstimmung zumindest eines des abstimmbaren optischen Kerbfilters (4) und des abstimmbaren optischen Kanalauswahlfilters (3) aufweist.

5. Vorrichtung gemäß einem der vorhergehenden Ansprüche, die ferner eine Wellenlängenreferenzquelle (6) zum Bereitstellen einer Wellenlängenreferenz zum Kalibrieren der Wellenlänge zumindest eines des abstimmbaren optischen Kanalauswahlfilters (3) und des abstimmbaren optischen Kerbfilters (4) aufweist.

6. Vorrichtung gemäß einem der vorhergehenden Ansprüche, bei der die Kanalübertragungsanalyse Bitfehlerraten-(BER-) Tests und/oder eine Protokollbasenanalyse umfasst.

7. Vorrichtung gemäß einem der vorhergehenden Ansprüche, bei der die optische Spektralanalyse eine Wellenlängen- oder Signal-Rausch- (S/N-) Verhältnis-Analyse umfasst.

8. Ein Verfahren zum Überwachen eines Kanalverhaltens in Dicht-Wellenlängenmultiplex- (DWDM-) Optiknetzen, wobei das Verfahren folgende Schritte aufweist:
Empfangen eines optischen Signals von einem DWDM-Optiknetz,
Leiten des optischen Signals durch ein abstimmbares optisches Kanalauswahlfilter, **gekennzeichnet durch**
Leiten des optischen Signals von dem abstimmbaren optischen Kanalauswahlfilter **durch** ein abstimmbares optisches Kerbfilter, und
Verarbeiten des optischen Signals von dem abstimmbaren optischen Kerbfilter, um ein Kanalverhalten in dem optischen Netz zu bestimmen,
wobei der Schritt des Verarbeitens des optischen Signals die Schritte einer Kanalübertragungsanalyse und einer optischen Spektralanalyse umfasst.

9. Ein Verfahren zum Überwachen eines Kanalverhaltens gemäß Anspruch 8, das ferner den Schritt eines Umwandelns des optischen Signals von dem abstimmbaren optischen Kernfilter in ein entsprechendes elektrisches Signal vor dem Verarbeitungsschritt aufweist.

10. Ein Verfahren zum Überwachen eines Kanalverhaltens gemäß entweder Anspruch 8 oder Anspruch 9, das ferner den Schritt eines Steuerns der Abstimmung zumindest eines des abstimmbaren optischen Kerbfilters und des abstimmbaren optischen Kanalauswahlfilters aufweist.

11. Ein Verfahren zum Überwachen eines Kanalverhaltens gemäß einem der Ansprüche 8, 9 oder 10, das ferner den Schritt eines Kalibrierens der Wellenlänge zumindest eines des abstimmbaren optischen Kerbfilters und des abstimmbaren optischen Kanalauswahlfilters aufweist.

12. Ein Verfahren zum Überwachen eines Kanalverhaltens gemäß einem der Ansprüche 8 bis 11, bei dem der Schritt der Kanalübertragungsanalyse Bitfehlerraten-(BER-) Tests und/oder eine Protokollbasenanalyse umfasst.

13. Ein Verfahren zum Überwachen eines Kanalverhaltens gemäß einem der Ansprüche 8 bis 12, bei dem der Schritt der optischen Spektralanalyse eine Wellenlängen- oder Signal-Rausch- (S/N-) Verhältnis-Analyse umfasst.

## Revendications

1. Appareil (1) destiné à surveiller la performance des canaux dans des réseaux optiques à multiplexage dense en longueur d'onde (DWDM), l'appareil comprenant une entrée optique destinée à recevoir un signal optique depuis un réseau optique DWDM (2), un filtre accordable (3) de sélection de canal optique, couplé à l'entrée optique et ayant une sortie, **caractérisé par** un filtre optique à encoches (4) accordable ayant une largeur de bande sensiblement plus étroite que celle du filtre accordable (3) de sélection de canal optique et ayant une entrée couplée à la sortie du filtre accordable (3) de sélection de canal optique et une sortie, un convertisseur (10) de signal optique en signal électrique, ayant une sortie couplée à la sortie du filtre optique à encoches (4) accordable, destinée à recevoir un signal optique depuis la sortie du filtre optique à encoches (4) accordable, et à le convertir en un signal électrique correspondant, et un moyen de traitement de signaux (5) ayant une entrée couplée à la sortie du convertisseur (10) de signal optique en signal électrique, destinée à traiter le signal électrique correspondant, et une sortie destinée à fournir un signal traité, le moyen de traitement de signaux (5) incluant un moyen (8) destiné à effectuer une analyse de transmission de canal et un moyen (9) destiné à effectuer une analyse spectrale optique.

2. Appareil selon la revendication 1, dans lequel le convertisseur (10) de signal optique en signal électrique comprend au moins un photodétecteur destiné à recevoir le signal optique filtré depuis la sortie du filtre optique à encoches accordable et à fournir un signal électrique correspondant au signal optique filtré reçu.

3. Appareil selon la revendication 2, dans lequel le moyen (5) de traitement de signaux reçoit le signal électrique depuis le photodétecteur.

4. Appareil selon l'une quelconque des revendications précédentes, comprenant en outre un moyen de contrôle (7) destiné à contrôler l'accordement d'au moins l'un du filtre optique à encoches (4) accordable et du filtre accordable (3) de sélection de canal optique.

5. Appareil selon l'une quelconque des revendications précédentes, comprenant en outre une source (6) de référence de longueur d'onde, destinée à fournir une référence de longueur d'onde destinée à étalonner la longueur d'onde d'au moins l'un du filtre accordable (3) de sélection de canal optique et du filtre optique à encoches (4) accordable.

6. Appareil selon l'une quelconque des revendications précédentes, dans lequel l'analyse de transmission de canal inclut des tests de taux d'erreurs binaires (BER) et/ou une analyse de bases protocolaires.

7. Appareil selon l'une quelconque des revendications précédentes, dans lequel l'analyse spectrale optique inclut une analyse de longueur d'onde ou de rapport du signal sur bruit (S/N).

8. Procédé destiné à surveiller la performance des canaux dans des réseaux optiques à multiplexage dense de longueurs d'ondes (DWDM), le procédé comprenant les étapes consistant à :
■ recevoir un signal optique depuis un réseau optique DWDM,
■ faire passer le signal optique à travers un filtre accordable de sélection de canal optique, **caractérisé par** les étapes consistant à
■ faire passer le signal optique, depuis le filtre accordable de sélection de canal optique, à travers un filtre optique à encoches accordable, et
■ à traiter le signal optique provenant du filtre optique à encoches accordable afin de déterminer la performance des canaux dans le réseau optique,
dans lequel l'étape consistant à traiter le signal optique inclut les étapes d'analyse de transmission de canal et d'analyse spectrale optique.

9. Procédé destiné à surveiller la performance des canaux selon la revendication 8, comprenant en outre l'étape consistant à convertir le signal optique provenant du filtre optique à encoches accordable en un signal électrique correspondant, antérieurement à l'étape de traitement.

10. Procédé destiné à surveiller la performance des canaux selon soit la revendication 8 soit la revendication 9, comprenant en outre l'étape consistant à contrôler l'accordement d'au moins l'un du filtre optique à encoches accordable et du filtre accordable de sélection de canal optique.

11. Procédé destiné à surveiller la performance des canaux selon l'une quelconque des revendications 8, 9 ou 10, comprenant en outre l'étape consistant à étalonner la longueur d'onde d'au moins l'un du filtre optique à encoches accordable et du filtre accordable de sélection de canal optique.

12. Procédé destiné à surveiller la performance des canaux selon l'une quelconque des revendications 8 à 11, dans lequel l'étape d'analyse de transmission de canal inclut des tests de taux d'erreurs binaires (BER) et/ou une analyse de bases protocolaires.

13. Procédé destiné à surveiller la performance des canaux selon l'une quelconque des revendications 8 à 12, dans lequel l'étape d'analyse spectrale optique inclut une analyse de longueur d'onde ou de rapport du signal sur bruit (S/N).
